Europäisches Patentamt

European Patent Office

Office européen des brevets

(11) Numéro de publication: **0 261 003 B1**

(12) **FASCICULE DE BREVET EUROPEEN**

(45) Date de publication de fascicule du brevet:
02.05.91

(51) Int. Cl.5: **H04B 17/02**

(21) Numéro de dépôt: 87401717.1

(22) Date de dépôt: 23.07.87

(54) **Installation de télélocalisation pas-à-pas de paires de répéteurs dans une liaison numérique.**

(30) Priorité: 24.07.86 FR 8610758

(43) Date de publication de la demande:
23.03.88 Bulletin 88/12

(45) Mention de la délivrance du brevet:
02.05.91 Bulletin 91/18

(84) Etats contractants désignés:
DE GB IT

(56) Documents cités:
EP-A- 0 043 308

CABLES ET TRANSMISSION, vol. 29, no. 1,
janvier 1975, pages 71-88, Paris, FR; F. PLA-
TET et al.: "Equipement de ligne TNL 2 pour
système de transmission numérique à 8,448
Mbit/s sur paires symétriques"

(73) Titulaire: **SAT Société Anonyme de Télécommunications**
**40, avenue de New York**
**F-75116 Paris(FR)**

(72) Inventeur: **Bargeton, Gilbert Louis**
**41, rue Cantagrel**
**F-75631 Paris Cedex 13(FR)**
Inventeur: **Lamaignere, Eric François Henri**
**41, rue Cantagrel**
**F-75631 Paris Cedex 13(FR)**

(74) Mandataire: **Martinet & Lapoux**
**62, rue des Mathurins**
**F-75008 Paris(FR)**

## Description

La présente invention concerne des perfectionnements à une installation de télélocalisation pas-à-pas de paires de répéteurs dans une liaison numérique.

Plus précisément, l'invention a trait à une installation de télélocalisation pas à pas de paires de premier et second répéteurs dans une liaison numérique entre des premier et second équipements terminaux. Ladite liaison est composée d'une première voie dans laquelle sont interconnectés les premiers répéteurs à travers des premiers moyens de commutation respectifs qui sont fermés pour transmettre un premier signal numérique du premier équipement vers le second équipement, et une seconde voie dans laquelle sont interconnectés les seconds répéteurs à travers des seconds moyens de commutation respectifs qui sont fermés pour transmettre un second signal numérique du second équipement vers le premier équipement.

Le premier équipement comprend des moyens, incluant des générateurs de signaux de télélocalisation et une unité de commande de télélocalisation, pour découper le premier signal numérique par des séquences d'interruptions. Chacune des séquences comprend $k$ premières interruptions ayant une largeur prédéterminée et une dernière interruption respectivement précédées par $k$ premiers champs de signal ayant une largeur prédéterminée et un dernier champ, $k$ étant un nombre entier. $r$ séquences sont transmises successivement dans la première voie pour télélocaliser une paire de répéteurs ayant un range entier $r$ compté à partir du premier équipement, le dernier champ de la dernière séquence des $r$ séquences ayant une largeur supérieure à celle des autres champs de signal.

Chaque paire de premier et second répéteurs est associée à des moyens incluant un circuit de temporisation et un compteur-décodeur pour compter les interruptions de chaque séquence, et à des moyens incluant une bascule monostable redéclenchable pour remettre à zéro lesdits moyens pour compter en réponse à une interruption dans le premier signal ayant une première largeur excédant la somme des largeurs d'un premier champ et d'une première interruption dans une séquence. Les moyens pour compter commandent une ouverture des premiers moyens de commutation respectifs pour déconnecter ledit premier répéteur du premier répéteur de rang suivant, et une ouverture des seconds moyens de commutation respectifs pour déconnecter ledit second répéteur du second répéteur de rang suivant et pour connecter lesdits premier et second répéteurs à travers une boucle de retour respective dès que les moyens pour compter ont un compte égal à $k$. Les moyens pour compter commandent également des fermetures des premiers et seconds moyens de commutation respectifs lorsque le compte est différent de $k$.

Une telle installation de télélocalisation est décrite dans la demande de brevet FR-A-2 486 335 ou le brevet correspondant EP-B-0043308. Dans cette installation, lorsqu'une paire de répéteurs est télélocalisée, ce qui se traduit par une liaison à travers un chemin de bouclage entre les répéteurs de cette paire afin de transmettre dans la second voie vers le premier équipement terminal un signal numérique de test initialement transmis par cet équipement dans la première voie, les premiers moyens de commutation respectifs sont ouverts. En d'autres termes, le premier répéteur de ladite paire est déconnecté des premiers répéteurs suivants de rangs supérieurs, se trouvant du côté du second équipement, pendant toute la durée du test de la paire télélocalisée.

Comme il est connu, répéteur comprend un égaliseur autoadaptif incluant un amplificateur à gain variable, dit correcteur de section de voie, et un circuit à commande automatique de gain (CAG) en vue de compenser l'atténuation du signal numérique reçu transmis à travers la section de vo ie respective. Sachant que le dernier champ de signal dans la dernière séquence de télélocalisation contient un signal numérique de test destiné à être analysé par le premier équipement en vue de déceler des défauts dans la paire de répéteurs localisée et que ce dernier champ a une durée relativement grande, les circuits à commande de gain dans les premiers répéteurs déconnectés du premier équipement terminal réagissent comme si les sections de première voie respectives les précédant avaient une longueur très grande, supérieure à une longueur maximale de sections de voie. Dans ce cas, le gain des égaliseurs dans les répéteurs déconnectés est maximal. Ce même phénomène de gain maximal se produit dans l'installation selon la FR-A-2 486 335, lorsque l'une des paires de répéteurs précédant la paire à télélocaliser est momentanément bouclée, la largeur de la dernière interruption d'une séquence étant nettement supérieure à la largeur des $k$ autres interruptions de la séquence.

Il s'avère que la déconnexion par rapport au premier équipement terminal des premiers répéteurs par ouverture des premiers moyens de commutation respectifs ou par ouverture des premiers moyens de commutation d'une paire télélocalisée peut engendrer en pratique un bouclage intempestif des paires de répéteurs déconnectés dû à un signal de bruit, et/ou engendrer un défaut de regénération de la séquence de télélocalisation transmise après débouclage d'une paire précédente, en raison du gain maximal du circuit de commande de gain qui ne permet pas une régénération convenable et donc une recopie correct d'une séquence de télélocalisation.

La présente invention vise à remédier principalement aux inconvénients évoqués ci-dessus, en assurant que toute interruption du premier signal numérique transmise dans les premiers répéteurs, y compris ceux ayant un rang supérieur à celui d'une paire de répéteurs à télélocaliser, est inférieure à une largeur telle qu'elle n'engendre aucune adaptation avec un gain maximal.

A cette fin, une installation conforme à l'invention est telle que définie dans la revendication 1.

D'autres avantages et caractéristiques de l'invention apparaîtront plus clairement à la lecture de la description suivante de plusieurs réalisations préférées selon l'invention en référence aux dessins annexés correspondants dans lesquels :

- la Fig.1 est un bloc-diagramme schématique d'une installation de télélocalisation pour une liaison numérique à câbles ;
- la Fig.2 est un bloc-diagramme schématique d'un circuit de télélocalisation inclus dans une paire de répéteurs de la liaison ; et
- la Fig. 3 montre des formes d'onde de signaux de télélocalisation et de divers signaux logiques respectivement reçus et établis par trois premières paires de répéteurs de la liaison.

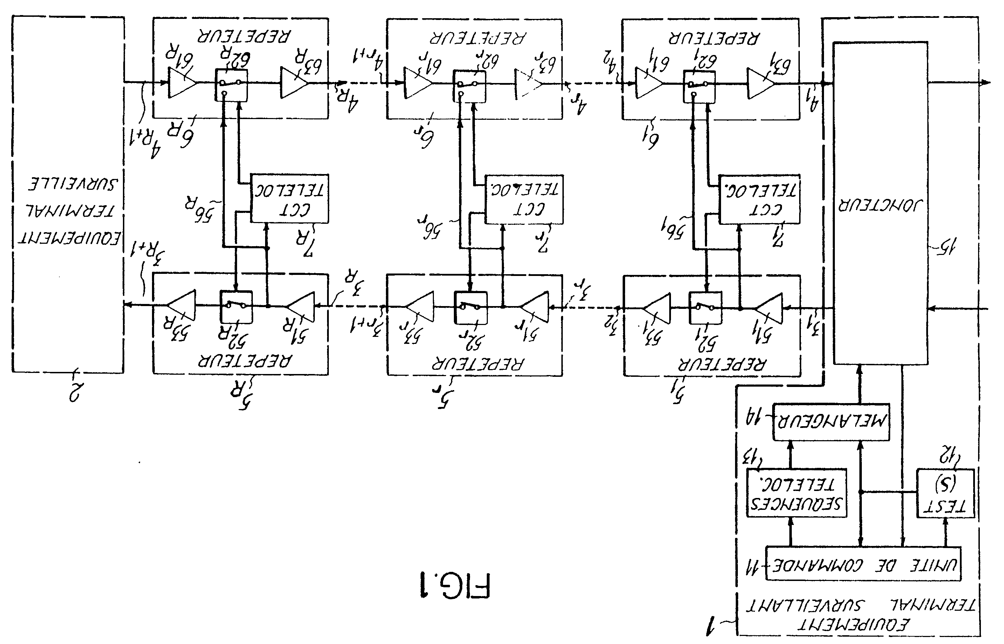

L'installation de télélocalisation montrée dans la Fig.1 concerne une liaison numérique bidirectionnelle transmettant des signaux numériques à 2048 kbit/s entre un premier équipement terminal dit surveillant 1 et un second équipement terminal dit surveillé 2. Entre ces deux équipements terminaux 1 et 2, la liaison est du type à quatre fils, c'est-à-dire comprend une première voie dite d'aller du type ligne coaxiale pour transmettre un premier signal numérique MIC de l'équipement 1 vers l'équipement 2, et une seconde voie dite de retour du type ligne coaxiale pour transmettre un second signal numérique MIC de l'équipement 2 vers l'équipement 1. La liaison est divisée en $R+1$ paires de sections de ligne $3_1$-$4_1$ à $3_{R+1}$-$4_{R+1}$ délimités par R paires de répéteurs $5_1$-$6_1$ à $5_R$-$6_R$ jalonnant la liaison. Les sections de ligne $3_1$ à $3_{R+1}$ et les répéteurs $5_1$ à $5_R$ sont assignés à la voie d'aller, et les sections $4_{R+1}$ à $4_1$ et les répéteurs $6_R$ à $6_1$ sont assignés à la voie de retour. Les sections de lignes $3_1$ et $4_1$ et les sections de ligne $3_{R+1}$ et $4_{R+1}$ sont reliées respectivement à l'équipement surveillant 1 et à l'équipement surveillé distant 2.

Selon la réalisation illustrée à la Fig. 1, chacun des répéteurs d'aller, tel que le répéteur $5_r$, où r est un entier compris entre 1 et R, comprend successivement à partir de la section précédente $3_r$ de la voie d'aller, un circuit d'entrée $51_r$, un circuit d'interruption $52_r$ représenté schématiquement par un interrupteur, et un circuit de sortie $53_r$

relié à la section suivante $5_{r+1}$ de la voie d'aller. Le circuit d'entrée $51_r$ comporte en entrée un transformateur d'adaptation, puis un égaliseur autoadapteur à circuit de commande automatique de gain (CAG), et un circuit de régénération et de récupération de rythme. Le circuit de sortie $53_r$ comprend un circuit d'amplification et un transformateur de sortie. Dans la voie de retour, chacun des répéteurs de retour, tel le répéteur $6_r$, comprend successivement à partir de la section précédente $4_{r+1}$, un circuit d'entrée $61_r$, un circuit de commutation $62_r$ représenté schématiquement par un commutateur à deux contacts stationnaires d'entrée et un contact mobile de sortie, et un circuit de sortie $63_r$ relié à la section siuvante $4_r$ de la voie de retour. Le circuit d'entrée $61_r$ comporte un transformateur d'adaptation suivi d'un égaliseur autoadaptif à circuit de commande automatique de gain. Le circuit de sortie $63_r$ comprend à partir du contact de sortie du commutateur $62_r$, un circuit de regénération et de récupération de rythme, un circuit d'amplification et un transformateur de sortie.

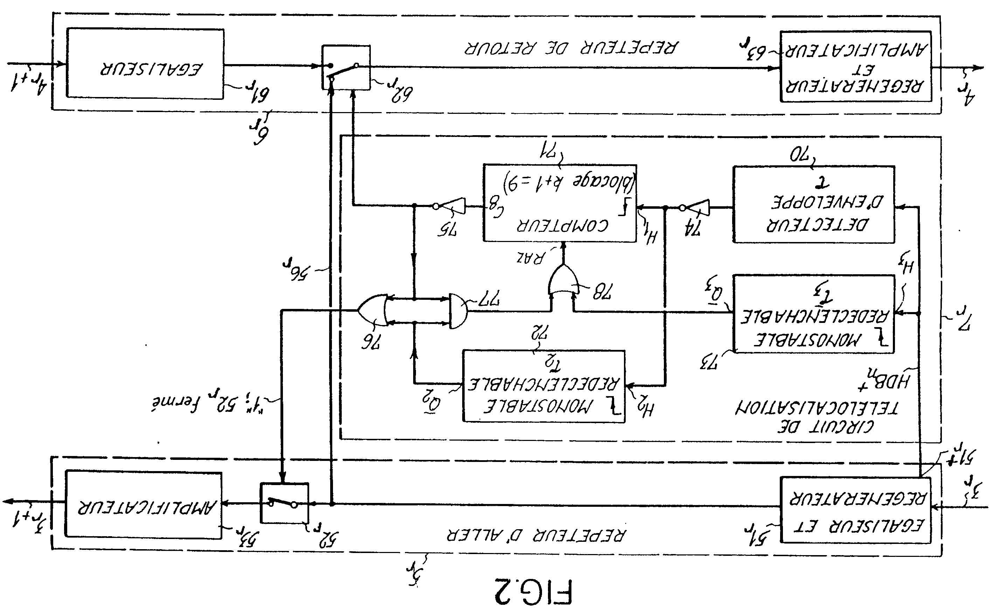

Chacune des paires de répéteurs, telle que la paire $5_r$-$6_r$, est associée à un circuit de télélocalisation respectif $7_r$ destiné principalement à commander l'interrupteur $52_r$ et le commutateur $62_r$, et à boucler la liaison à partir de l'équipement terminal surveillant 1 à travers un chemin de bouclage $56_r$ entre les répéteurs $5_r$ et $6_r$. Comme montré schématiquement à la Fig.2, le circuit de télélocalisation comprend essentiellement un détecteur d'enveloppe 70, un compteur 71, deux bascules monostables redéclenchables 72 et 73 et d'autres composants logiques 74 à 78.

Une entrée du détecteur d'enveloppe 70 et une entrée d'horloge $H_3$ de la bascule 73 sont reliées à une sortie $51_r^+$ du circuit d'entrée $51_r$. La sortie $51_r^+$ est en fait, celle du circuit de régénération correspondant transmettant l'un de deux signaux binaires regénérés obtenus à partir du signal numérique MIC transmis par la section $3_r$ de la voie d'aller. On suppose ici que le signal numérique est codé avec un code de ligne bipolaire à haute densité HDBn, et que le signal binaire délivré par la sortie $51_r^+$ correspond à un signal $HDBn^+$ qui est à l'état "1" uniquement en correspondance avec des marques bipolaires positives dans le signal codé. On rappelle qu'un signal en code HDBn ne peut que contenir que n zéros consécutifs, et par suite le signal $HDBn^+$ ne peut contenir que $(2n+1)$ zéros consécutifs, correspondant à une durée de 3,4 $\mu s$ pour le code HDB3 auquel on se référera dans la suite.

Le détecteur d'enveloppe 70 est destiné principalement à inhiber toute coupure, ou interruption, se trouvant normalement dans le signal numérique MIC de la voie d'aller, afin de ne point être compté par le compteur 71 et de ne pas déclencher la bascule 72. Une telle interruption correspond à $n = 3$ zéros consécutifs dans le signal en ligne et donc à $2n + 1 = 7$ zéros consécutifs dans la signal HDB3$^+$. En outre afin d'éviter de tel comptage et déclenchement par des mi crocoupures indésirables dans le signal numérique, dues par exemple à d'éventuelles erreurs lors d'opérations de régénération dans des répéteurs, le temps de réponse $\tau$ du détecteur 70 est choisi nettement plus grand que la durée de 3,4 $\mu$s, mais plus petit que des microcoupures d'une séquence de télélocalisation définie dans la suite. Typiquement, $\tau$ est compris entre 30 $\mu$s et 250 $\mu$s. Ainsi, le détecteur 70 délivre un signal binaire détecté correspondant au signal numérique transmis dans la ligne et n'ayant pas de microcoupures inférieures à $\tau$, ou plus précisément ayant des microcoupures correspondant à celles incluses dans le premier signal numérique transmis mais avec une largeur diminuée de $\tau$ à partir des fronts descendants de ces microcoupures.

Des entrées d'horloge $H_1$ et $H_2$ du compteur 71 et de la bascule 72 sont reliées à la sortie du détecteur 70 à travers un inverseur 74.

L'entrée $H_1$ est déclenchée par des fronts montants du signal détecté correspondants à des fronts descendants du premier signal numérique transmis. Le compteur 71 compte des microcoupures ou interruptions dans le signal détecté afin de détecter $k = 8$ premières microcoupures périodiques et une $(k+1)$ième $= 9$ième microcoupure dans une séquence de télélocalisation. Une sortie $C_8$ du compteur 71 est à l'état "1" seulement lorsque le compte du compteur est égal à $k = 8$. Le compteur 71 est bloqué lorsque son compte est égal à $k + 1 = 9$.

La bascule 72 est une bascule monostable qui est redéclenchable par des fronts descendants du signal sortant de l'inverseur 74 et correspondant à des fronts montants du premier signal numérique transmis, c'est-à-dire des fronts avant de champs de ce premier signal numérique. Une sortie inverse $\overline{Q}_2$ de la bascule 72 est à l'état "0" en réponse à un front descendant à l'entrée $H_2$, cet état "0" demeurant jusqu'à la fin d'une constante de temps $\tau_2$ pendant laquelle aucun front descendant n'est présant à l'entrée $H_2$.

La sortie $C_8$ du compteur 71 et la sortie $\overline{Q}_2$ de la bascule 72 sont reliées à travers un inverseur 75 et directement à des premières entrées et des secondes entrées d'une porte OU 76 et d'une porte ET 77 respectivement. Une sortie de la porte OU 76 commande l'interrupteur 52 $_r$, tandis qu'une sortie de l'inverseur 75 commande le commutateur 62 $_r$. En fonctionnement normal de la liaison, comme montré à la Fig. 1, relativement aux répéteurs $5_1$ et $6_1$, ou 5 $_r$ et 6 $_r$, lorsque le compte du compteur est différent de $k = 8$, la sortie de l'inverseur 75 est à l'état "1" et "ferme" le commutateur 62 $_r$ pour relier la sortie du circuit d'entrée 61 $_r$ à l'entrée du circuit de sortie 63 $_r$ dans la voie de retour, et déconnecter la sortie du circuit d'entrée 51 $_r$ et l'entrée du circuit de sortie 63 $_r$. Egalement en fonctionnement normal, la sortie $C_8$ à l'état "0" commande à travers l'inverseur 75 et la porte 76 dont la sortie est à l'état "1", la fermeture de l'interrupteur 52 $_r$, pour relier la sortie du circuit d'entrée 51 $_r$ à l'entrée du circuit de sortie 53 $_r$ dans la voie d'aller.

La seconde bascule monostable 73 a une entrée d'horloge $H_3$ redéclenchable par des fronts descendants du signal HBD3$^+$ délivré par la borne 51 $_r$. La bascule 73 a une constante de temps $\tau_3$ inférieure à $\tau_2$. Une sortie inverse $\overline{Q}_3$ de la bascule 73 passe ainsi à l'état "0" en réponse à un front descendant dans le signal numérique de la voie d'aller, y compris pour des fronts descendants précédant des suites de "0" dans le signal numériques. La sortie $\overline{Q}_3$ et une sortie de la porte ET 77 sont reliées respectivement à deux entrées d'une porte OU 78 ayant une sortie reliée à une entrée de remise à zéro RAZ du compteur 71. Le compteur 71 est remis à zéro en réponse à un état "1" à la sortie de la porte 78.

On rappelle que, comme dans l'installation selon la FR-A-2 486 335, les équipements terminaux 1 et 2 comportent des circuits nécessaires à la télélocalisation des répéteurs, à la téléalimentation des répéteurs dans le cas où la liaison est réalisée par des câbles, à l'élaboration de signaux numérique de test particulier, tels que signaux pseudoaléatoires, en vue de détecter des défauts dans les voies d'aller et de retour de la liaison, à la production d'un signal d'indication d'alarme (SIA) qui est transmis vers l'extérieur de la liaison en réponse à une détection de défaut, et à la transmission d'un signal d'inhibition d'alarme qui est transmis dans la liaison en réponse à un signal d'indication d'alarme provenant de l'extérieur de la liaison. En particulier, l'équipement terminal surveillant 1 comprend une unité de commande 11, de préférence amovible incluant un microprocesseur, un clavier alphanumérique et un dispositif d'affichage pour permettre à un opérateur d'ordonner automatiquement ou manuellement, une télélocalisation pas-à-pas d'une paire de répéteurs de rang donné 1 à R, et de sélectionner un signal de test et des programmes d'analyse de circuits déterminés de répéteurs télélocalisés. Comme montré à la Fig.1, l'équipement 1 contient en particulier un générateur de signal de test 12, un générateur de séquence de télélocalisation 13, un mélangeur de signaux 14 et un joncteur 15.

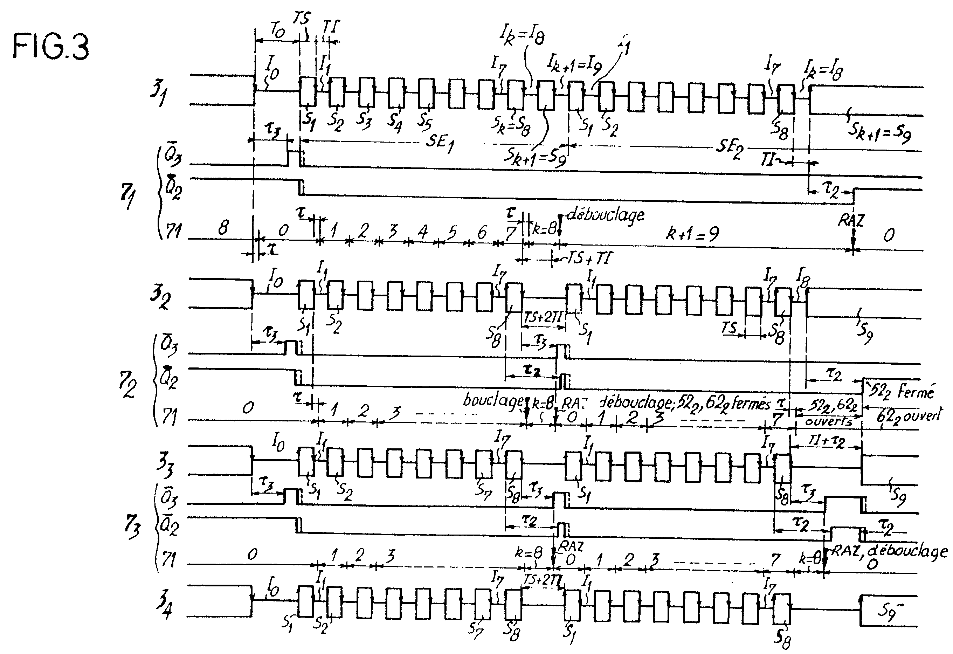

Comme montré à une première ligne de la Fig.3, un signal de télélocalisation comprend des séquences de télélocalisation SE destinée chacune à boucler, à éventuellement tester, puis à déboucler une pair de répéteurs respective. Une séquence SE est composée de $k+1 = 9$ champs $S_1$ à $S_9$ incluant des portions de signal de test et correspondant à des impulsions à l'état "1" d'un signal de découpage de télélocalisation établi par le générateur 13. Chacun des champs $S_1$ à $S_8$ et le champ $S_9$, lorsque celui-ci précède une autre séquence, a une largeur prédéterminée TS et précède une interruption ou microcoupure sans signal de test $I_1$ à $I_9$ ayant une largeur prédéterminée TI, en pratique égale à TS. Le signal de découpe établi par le générateur 13 est donc un signal impulsionnel qui découpe dans le mélangeur 14 le signal de test produit par le générateur 12 en le signal de télélocalisation sortant du mélangeur 14. Le signal de télélocalisation est transmis dans le première section $3_1$ de la voie d'aller à travers le joncteur 15, et est partiellement récupéré par l'unité de commande 11 à partir de la section $4_1$ de la voie de retour lorsqu'une paire de répéteurs est bouclée. Le joncteur 15 peut comporter, outre des commutateurs pour introduire et récupérer le signal de test, une pair de répéteurs. Dans ce cas, la paire de répéteurs incluse dans le joncteur joue le rôle de la première paire $5_1$-$6_1$. De même, la dernière paire de répéteurs $5_R$-$6_R$ peut être incluse dans un joncteur de l'équipement terminal distant 2.

En référence aux Figs.2 et 3, une télélocalisation d'une paire de répéteurs, telle que la second paire $5_2$-$6_2$ estla suivante.

Avant la transmission de deux séquences de télélocalisation $SE_1$ et $SE_2$ destinées respectivement à boucler et déboucler fugitivement la première paire de répéteurs $5_1$-$6_1$ et à boucler et tester la second paire de répéteurs $5_2$-$6_2$ à télélocaliser, le signal de télélocalisation comprend une interruption large $I_0$ ayant une largeur $T_0$ supérieure à $\tau_3$ et précédant le premier champ $S_1$ dans le première séquence $SE_1$. En réponse au front descendant de l'interruption $I_0$, toutes les secondes bascules 73 dans les circuits $7_1$ à $7_R$ sont déclenchées et les sorties $\overline{Q}_3$ de ces bascules passent à "1" après une durée $\tau_3$, inférieure à $T_0$, jusqu'au premier front descendant apparaissant dans le champ $S_1$ de la séquence $SE_1$. L'état "1" des sorties $\overline{Q}_3$ remet à zéro tous les compteurs 71. Cette remise à zéro permet de re mettre à zéro notamment un compteur dans une paire de répéteurs précédemment télélocalisés dans laquelle l'interrupteur et le commutateur des voies d'aller et de retour étaient respectivement fermé et ouvert. Un compteur dont le compte passe de $k=8$ à $k+1 = 9$ en réponse au front descendant de l'interruption $I_0$ passe également à zéro, puisque $T_0 \gg \tau$.

Suite au premier front montant dans le champ $S_0$ de la première séquence $SE_1$, toutes les premières bascules 72 dans les circuits $7_1$ à $7_R$ sont déclenchées et leurs sorties $\overline{Q}_2$ demeurent à l'état "0" tant que des front montants du signal de télélocalisation se succèdant avec des durées inférieures à $\tau_2$ ; ceci est réalisé pour au moins tous les fronts montants des champs $S_1$ à $S_8$ de la première séquence $SE_1$, car on a $\tau_2 > TS + TI$.

En réponse aux fronts descendants des interruptions $I_1$ à $I_k = I_8$ dans la première séquence $SE_1$, les comptes de tous les compteurs 71 dans les circuits $7_1$ à $7_R$ passent de 1 à $k = 8$. Les sorties $\overline{Q}_2$ demeurent à l'état "0" et les compteurs 71 ne sont pas remis à zéro à travers les portes 77 et 78. La sortie $C_8$ des compteurs demeurent à "0" tant que $k = 8$ interruptions ne sont pas comptées, et par suite, tous les interrupteurs $52_1$ à $52_R$ et commutateurs $62_1$ à $62_R$ demeurent fermés.

En réponse au front descendant de l'interruption $I_k = I_8$ dans la première séquence $SE_1$, tous les compteurs 71 ont leurs sorties $C_8$ à l'état "1" et par suite, les sorties des portes OU 76 sont à l'état "0" pour ouvrir les interrupteurs $52_1$ à $52_R$, et les sorties des inverseurs 75 ont à l'état "0" pour ouvrir les commutateurs $62_1$ à $62_R$. La première paire de répéteurs $5_1$-$6_1$ est alors bouclée, grâce au chemin de bouclage $56_1$ entre la sortie du circuit $51_1$ et l'entrée du circuit $63_1$, ce bouclage demeurant jusqu'à ce que le compte du compteur 71 dans le circuit $7_1$ passe à $k+1 = 9$ en réponse au front descendant de l'interruption $I_{k+1} = I_9$. Le bouclage de la première paire de répéteurs $5_1$-$6_1$ inhibe ainsi la transmission du champ de signal de test $S_{k+1} = S_9$ vers les autres répéteurs $5_2$ à $5_R$, comme montré à des cinquième, neuvième et treizième lignes de la Fig.3.

Le passage du compte du compteur 71 dans le circuit $7_1$ de $k = 8$ à $k+1 = 9$ provoque, d'une part, le blocage à $k+1 = 9$ de ce compteur qui ne peut être remis à zéro que par la bascule 72 du circuit $7_1$ en réponse à un champ de signal ayant une largeur supérieure à $\tau_2$, ou que par la bascule 73 du circuit $7_1$ en réponse à une interruption, telle que l'interruption $I_0$, ayant une largeur supérieure à $\tau_3$, et d'autre part, les fermetures de l'interrupteur $52_1$ et du commutateur $62_1$ et donc le débouclage de la paire de répéteurs $5_1$-$6_1$ ce qui permet de retransmettre la séquence suivante $SE_2$ vers les autres répéteurs $5_2$ à $5_R$. Ainsi, au niveau des répéteurs $5_2$ à $5_R$, le bouclage et le débouclage des répéteurs $5_1$ et $6_1$ provoque une interruption de largeur (TS + 2 TI) qui est supérieure à la constante de temps $\tau_3$ des bascules 73. Dans les circuits $7_2$ à $7_R$, les sorties $\overline{Q}_3$ des bascules 73 passent à l'état "1" après une durée $\tau_3$ succédant au front descendant de l'interruption $I_k = I_8$ dans la séquence $SE_1$ et donc remettent à zéro les compteurs 71 dans les circuits $7_2$ à $7_R$. Par suite, les interrupteurs $52_2$ à $52_R$ et les commutateurs $62_2$ à $62_R$ sont fermés ce qui débouche les paires

de répéteurs $5_2$-$6_2$ à $5_R$-$6_R$ et permet la transmission de la séquence de télélocalisation suivante $SE_2$ vers les répéteurs $5_2$ à $5_R$. Sachant que, $\tau_2$ est érieur à TI + TS , le front montant du champ $S_k = S_8$ de la séquence $SE_1$ peut provoquer la mise à "1" des sorties $\overline{Q}_3$ des bascules 72 dans les circuits $7_2$ à $7_R$ et donc la remise à zéro des compteurs 71 antérieurement à la mise à "1" des bascules 73 dans les circuits $7_2$ à $7_R$. Cependant, en pratique, $\tau_2$ est supérieur à TS + $\tau_1$ ou de préférence supérieur à 2 TS + 2 TI , si bien que les bascules 73 ne sont pas déclenchées pendant l'opération de bouclage-débouclage de la paire de répéteurs $5_1$-$6_1$.

Des séquences analogues à la séquence $SE_1$ provoquent successivement des opérations de bouclage-débouclage analogues, à savoir pour la fin d'une séquence $S_r$ de rang r, les bouclages et débouclages des paires de répéteurs $5_r$-$6_r$ à $5_R$-$6_R$, le blocage à k + 1 = 9 du compteur $71_r$ dans le circuit $7_r$ et la remise à zéro des compteurs dans les circuits $7_{r+1}$ à $7_R$. Il apparaît ainsi que les circuits d'entrée $51_1$ à $51_R$ ne reçoivent pas de signal pendant des durées relativement courtes, n'excédant pas TS + 2 TI , incluses dans la succession des séquences.

Lorsque l'on désire analyser une paire de répéteurs déterminée, telle que la paire $5_2$-$6_2$, la séquence de télélocalisation de même rang, telle que la séquence $SE_2$, a un dernier champ de signal $S_9$ ayant une largeur excédant la constante de temps $\tau_2$ ; pendant ce champ $S_9$, le signal de test est véritablement analysé dans l'équipement 1 en vue de localiser des défauts dans la paire de répéteurs télélocalisée.

Ainsi, comme montré à la Fig.3, la séquence $SE_2$ est identique à la séquence $SE_1$ à l'exception de la largeur du dernier champ de signal $S_{k+1} = S_9$.

Le compteur 71 dans le circuit $7_1$ étant bloqué à k + 1 = 9 après la séquence $SE_1$, et les interruptions $I_1$ à $I_9$ de la séquence $SE_2$ ayant une largeur n'excédant pas la durée $\tau_3$, et les champs $S_1$ à $S_8$ de la séquence $SE_2$ ayant une largeur TS n'excédant pas la durée $\tau_2$, aucune opération de bouclage et débouclage dans la paire de répéteurs $5_1$-$6_1$ n'est effectuée, y compris après le front montant du dernier champ $S_9$. Cependant, pendant une durée $\tau_2$ succédant au début du champ $S_9$ de la séquence $SE_2$, la bascule 72 dans le circuit $7_1$ n'est plus déclenchée du fait de l'absence d'interruption supérieure à $\tau$ ; la sortie $\overline{Q}_2$ de la bascule précitée 72 passe à "1" et, comme la sortie $C_8$ du compteur 71 dans le circuit $7_1$ est à "0", ce compteur est remis à zéro après une durée $\tau_2$ succédant au front montant du champ $S_{k+1} = S_9$ de la séquence $SE_2$, comme montré à des troisième et quatrième lignes de la Fig. 3.

De même, la bascule 72 dans le circuit $7_2$ de la paire de répéteur à télélocaliser a une sortie $\overline{Q}_2$ passant à "1" après une durée $\tau_2$ succédant au front montant du champ $S_{k+1} = S_9$ de la séquence $SE_2$. Cependant, le compteur 71 dans le circuit $7_2$ a un compte égal à k = 8, suite au front descendant de l'interruption $I_k = I_8$ de la séquence $SE_2$, ce qui provoque le bouclage de la paire de répéteurs $5_2$-$6_2$ par ouverture de l'interrupteur $52_2$ et du commutateur $62_2$, comme montré à des septième et huitième lignes de la Fig. 3. Le passage de la bascule précitée 72 à l'état "1" ouvre la porte OU 76 et donc ferme l'interrupteur $52_1$ ce qui permet de transmettre le champ de test $S_9$ de la séquence $SE_2$, excepté une portion de celui-ci de largeur $\tau_2$ succédant au front montant de l'interruption $I_8 = I_k$, vers le répéteur d'aller suivant $5_3$.

Dans les circuits de télélocalisation $7_3$ à $7_R$ des autres paires de répéteurs, le front descendant de l'interruption $I_k = I_8$ de la séquence $SE_2$ provoque des bouclages en réponse à des comptes des compteurs 71 égaux à k = 8, et l'absence d'un front montant de l'interruption $I_k = I_8$ après une durée $\tau_3$ provoque la remise à zéro des compteurs 71 et des opérations de débouclage, d'une manière analogue à la séquence $SE_1$. Cependant, l'intervalle temporel entre le front montant du dernier champ normal $S_k = S_8$ et le front montant du prochain champ de signal $S_{k+1} = S_9$ partiellement "estompé" est égal à TS + TI + $\tau_2$ et est donc supérieur à la constante de temps $\tau_2$ laquelle est supérieure à $\tau_1$ + TS . Comme montré dans les cinq dernières lignes de la Fig.3, après débouclage de la paire de répéteur $5_3$-$6_3$ et avant la réception du début du champ $S_9$ véritablement reçu par le répéteur $5_2$, la sortie $\overline{Q}_2$ de la bascule 72 passe à l'état "1" puis, passe à l'état "0" en réponse au front montant décalé du champ $S_9$ reçu ; le changement d'état de la sortie $\overline{Q}_2$ tout comme un changement d'état de "1" à "0" de la sortie $\overline{Q}_3$ de la bascule 73 dans le circuit $7_3$, ne modifie pas le compte à "0" du compteur et les états de sortie de l'inverseur 75 et de la porte OU 76 qui maintiennent la fermeture de l'interrupteur $52_3$ et du commutateur $62_3$ et par suite permettent le passage du champ partiellement estompé $S_9$ vers le répéteur suivant $5_4$.

Des opérations analogues sont également réalisées dans les autres circuits de télélocalisation $7_4$ à $7_R$, si bien que le champ de signal $S_{k+1} = S_9$ servant à tester les répéteurs $5_2$-$6_2$ est pratiquement transmis vers les autres répéteurs $5_3$ à $5_R$. Les circuits d'entrée $51_3$ à $51_R$ reçoivent ainsi un signal numérique ayant des interruptions relativement courtes, n'excédant pas TI + $\tau_2$, et par suite, les circuits de commande automatique de gain dans les égaliseurs des répéteurs d'aller n'ont pas une durée suffisante pour atteindre un gain maximal suite aux microcoupures, qui pourrait entacher une recopie correcte du signal de découpe transmis par le générateur 13.

Après le champ de signal de test $S_{k+1}$ de la séquence $SE_2$, une interruption $I_0$ permet de déboucler la paire de répéteurs $5_2$-$6_2$ par mise à $k+1$ = 9 puis à zéro du compteur 71 du circuit $7_2$.

A titre d'exemple, les durées et constante de temps définies ci-dessus sont les suivantes pour un signal numérique à 2048 kbit/s :

$T_0 \simeq 1,50$ ms

$TS \simeq 400$ $\mu$s

$TI \simeq TS \simeq 400$ $\mu$s

$30$ $\mu$s $\tau< 250$ $\mu$s $< TS, TI$

$TS + \tau_3 \simeq 1200$ $\mu$s $< \tau_2 < 2300$ $\mu$s $< T_0$

$TI + TS = 800$ $\mu$s $< \tau_3 < 1200$ $\mu$s $= TS + 2$ $TI$ $< T_0$

Il est à noter que, d'une manière sensiblement analogue à l'installation de télélocalisation selon la FR-A-2 486 335, un circuit de télélocalisation $7_r$ selon l'invention est affranchi contre toute commande de bouclage de la paire de répéteurs associée $5_r$-$6_r$ par des interruptions indésirables dues à la foudre par exemple. En référence aux Figs.2 et 3, un bouclage ne peut être réalisé qu'après le comptage de $k = 8$ interruptiona ayant chacune une largeur inférieure à $\tau_3 < \tau_2$. Si parmi $k = 7$ interruptions indésirables, l'une d'entre elles, a une largeur excédant la constante de temps $\tau_3$, la sortie de la bascule 73 passe à l'état "1" et remet à zéro le compteur 71. Si par ailleurs, au moins une interruption indésirable s'enchevêtre dans une séquence de télélocalisation, l'équipement terminal surveillant 1 reçoit par la voie de retour le signal de test antérieurement à l'interruption $I_k = I_8$ provoquant normalement un bouclage, ce qui est signalé à l'opérateur afin de réinitialiser une télélocalisation.

Bien que l'invention ait été décrite selon un exemple préféré, d'autres réalisations entrant dans l'o sont concevables par l'homme du métier. La liaison entre les équipements terminaux peut être en partie ou totalement à câbles coaxiaux, à fibres optiques ou à liaisons hertziennes. Les signaux transmis dans la liaison peuvent être du type analogique avec conversions analogique-numérique et numérique-analogique dans les répéteurs. En outre, un commutateur $62_r$ peut être remplacé par deux interrupteurs, l'un dans la voie de retour, l'autre dans le chemin de bouclage $56_r$ entre les voies d'aller et de retour. Dans les paires de répéteurs, l'interrupteur $52_r$ et le commutateur $62_r$ peuvent être interconnectés à d'autres endroits que ceux montrés dans la Fig.2, par exemple respectivement en sortie du circuit de sortie $53_r$ et en entrée du circuit d'entrée $61_r$. Les interrupteurs et les commutateurs peuvent être du type à contact de relais ou à transistors. Dans le circuit de télélocalisation $7_r$, les entrées du détecteur 70 et de la bascule 73 peuvent recevoir le signal $HDBn^-$ au lieu du signal $HDBn^+$, ou recevoir respectivement les signaux $HDBn^+$ et $HDBn^-$, ou recevoir le signal numérique regénéré à travers un convertisseur binaire-bipolaire.

## Revendications

1. Installation de télélocalisation pas à pas de paires de premier et second répéteurs dans une liaison de transmission numérique bidirectionnelle entre des premier et second équipements terminaux,

ladite liaison étant composée d'une première voie de transmission ($3_1$ à $3_{R+1}$) dans laquelle sont interconnectés les premiers répéteurs ($5_1$ à $5_R$) à travers des premiers moyens de commutation respectifs ($52_1$ à $52_R$) qui sont fermés pour transmettre un premier signal numérique du premier équipement (1) vers le second équipement (2), et une seconde voie de transmission ($4_{R+1}$ à $4_1$) dans laquelle sont interconnectés les seconds répéteurs ($6_R$ à $6_1$) à travers des seconds moyens de commutation respectifs ($62_R$ à $62_1$) qui sont fermés pour transmettre une second signal numérique du second équipement (2) vers le premier équipement (1),

le premier équipement (1) comprenant des moyens (11 à 14) pour découper la premier signal numérique par des séquences d'interruptions (SE),

chacune des séquences comprenant $k$ premières interruptions ($I_1$ à $I_k$) ayant une largeur prédéterminée (TI) et une dernière interruption ($I_{k+1}$) respectivement précédées par $k$ premiers champs de signal ($S_1$ à $S_k$) ayant une largeur prédéterminée (TS) et un dernier champ ($S_{k+1}$), $k$ étant un nombre entier, $r$ séquences étant transmises successivement dans la première voie pour télélocaliser une paire de répéteurs ($5_r$, $6_r$) ayant un rang entier $r$ compté à partir du premier équipement (1), le dernier champ de la dernière séquence des $r$ séquences ayant une largeur supérieure à celle des autres champs de signal,

chaque paire de premier et second répéteurs ($5_r$, $6_r$) étant associée à des moyens (71, 75) pour compter les interruptions de chaque séquence, et à des moyens (73) pour remettre à zéro lesdits moyens pour compter en réponse à une interruption dans le premier signal ayant une première largeur ($\tau_3$) excédant la somme des largeurs (TS + TI) d'un premier champ et d'une première interruption dans une séquence (SE), et

lesdits moyens pour compter (71, 75) commandant une ouverture des premiers moyens de commutation respectifs (52 $_r$) pour déconnecter ledit premier répéteur respectif (5 $_r$) du premier répéteur de rang suivant (5 $_{r+1}$), et une ouverture des seconds moyens de commutation respectifs (62 $_r$) pour déconnecter ledit second répéteur respectif (6 $_r$) du second répéteur de rang suivant (6 $_{r+1}$) et pour connecter lesdits premier et second répéteurs respectifs (5 $_r$, 6 $_r$) à travers une boucle de retour respective (56 $_r$) dès que les moyens pour compter atteignent un compte égal à k, et commandant des fermetures des premiers et seconds moyens de commutation respectifs (52 $_r$, 62 $_r$) lorsque le compte est différent de k,

caractérisée en ce qu'à chaque paire de premier et second répéteurs (5 $_r$, 6 $_r$) sont associés des moyens (72, 76, 77) pour détecter des champs du premier signal ayant une seconde largeur ($\tau_2$) supérieure à ladite somme des largeurs (TS + TI) d'un premier champ et d'une première interruption dans une séquence, lesdits moyens pour détecter (72, 76, 77) commandant la fermeture des premiers moyens de commutation respectifs (52 $_r$) dès qu'un champ du premier signal excède ladite somme et lorsque le compte des moyens de comptage associés (71, 75) est égal à k, et commandant la remise à zéro desdits moyens de comptage associés dès qu'un champ du premier signal excède ladite somme et lorsque le compte des moyens de comptage associés est différent de k.

2. Installation conforme à la revendication 1, caractérisée en ce que les dernières interruptions (I $_{k+1}$) ont des largeurs (TI) égales aux premières interruptions, et les derniers champs (S $_{k+1}$) dans les (r-1) premières séquences ont des largeurs (TS) égales aux premiers champs.

3. Installation conforme à la revendication 1 ou 2, caractérisée en ce que la première largeur ($\tau_3$) est inférieure à la somme de la largeur (TS) des premiers champs et du double de la largeur (2 TI) d'une interruption dans une séquence (SE).

4. Installation conforme à l'une quelconque des revendications 1 à 3, caractérisé en ce que la seconde largeur ($\tau_2$) est supérieure à la somme de la première largeur ($\tau_3$) et de la largeur d'un premier champ de séquence (TS).

5. Installation conforme à l'une quelconque des revendications 1 à 4, caractérisée en ce que les moyens pour détecter des champs (72, 76, 77) comprennent une bascule monostable (72) redéclenchable par des fronts avant (montant) de champs du premier signal et ayant une constante de temps égale à la seconde largeur ($\tau_2$), une porte OU (76) ayant deux entrées respectivement reliées à une sortie ($\overline{Q}_2$) de la bascule et à une sortie (C$_8$, 75) des moyens pour compter (71, 75) et une sortie commandant les premiers moyens de commutation respectifs (52 $_r$), et une porte ET (77) ayant deux entrées respectivement reliées aux sorties ($\overline{Q}_2$; C$_8$, 75) de la bascule et des moyens de comptage et une sortie reliée à une entrée de remise à zéro (RAZ) des moyens pour compter, ladite sortie des moyens de comptage commandant les seconds moyens de commutation respectifs (62 $_r$).

## Claims

1. System for step-by-step remote locating pairs of first and second repeaters in a bidirectional digital transmission link between first and second end equipements.

said link comprising a first transmission channel ($3_1$ to $3_{R+1}$) in which the first repeaters ($5_1$ to $5_R$) are interconnected via respective first switching means ($52_1$ à $52_R$) which are closed to transmit a first digital signal from the first equipement (1) to the second equipement (2), and a second transmission channel ($4_{R+1}$ to $4_1$) in which the second repeaters ($6_R$ to $6_1$) are interconnected via respective second switching means ($62_R$ à $62_1$) which are closed to transmit a second digital signal from the second equipement (2) to the first equipement (1),

the first equipement (1) comprising means (11 to 14) for chopping the first digital signal with interruption sequences (SE),

each of the sequences comprising k first interruptions ($I_1$ to $I_R$) having a predetermined width (TI) and a last interruption ($I_{k+1}$) preceded by k first signal fields ($S_1$ to $S_k$) having a predetermined width (TS) and a last field ($S_{k+1}$) respectively, k being an integer, r sequences being transmitted consecutively on the first channel to remote locate a repeater pair ($5_r$, $6_r$) having an integer rank r counted from the first equipement (1), the last field of the last sequence of the r sequences having a width greater than that of the other signal fields,

each pair of first and second repeaters ($5_r$, $6_r$) being associated with means (71, 75) for counting the interruptions in each sequence, and with means (73) for zero-resetting said counting means in response to an interruption in the first signal having a first width ($\tau_3$) exceeding the sum of the widths (TS + TI) of a first field and a first interruption in a sequence (SE), and

said counting means (71, 75) controlling an opening of the respective first switching means ($52_r$) thereby disconnecting said respective first repeater ($5_r$) from the first repeater of following rank ($5_{r+1}$) and an opening of the respective second means ($62_r$) thereby disconnecting said respective second repeater ($6_r$) from the second repeater of the following rank ($6_{r+1}$) and for connecting said respective first and second repeaters ($5_r$, $6_r$) through a respective loop-back path ($56_r$) as soon as said counting means reach a count equal to k, and controlling closures of the respective first and second switching means ($52_r$, $62_r$) when the count is different from k,

characterized in that with each pair of first and second repeaters ($5_r$, $6_r$) are associated means (72,76,77) for detecting fields of the first signal having a second width ($\tau_2$) greater than said sum of the widths (TS + TI) of a first field and a first interruption in a sequence, said detecting means (72,76,77) controlling the closure of the first respective switching means ($52_r$) as soon as a field of the first signal exceeds said sum and when the count in the associated counting means (71,75) is equal to k, and controlling the zero-resetting of said associated counting means as soon as a field of the first signal exceeds said sum and when the count in the associated counting means is different from k.

2. System according to claim 1, characterized in that the last interruptions ($I_{k+1}$) have widths (TI) equal to the first interruptions, and the last fields ($S_{k+1}$) in the (r-1) first sequences have widths (TS) equal to the first fields.

3. System according to claim 1 or 2, characterized in that the first width ($\tau_3$) is less than the sum of the width (TS) of the first fields and double the width (2TI) of an interruption in a sequence (SE).

4. System according to any one of claims 1 to 3, characterized in that the second width ($\tau_2$) is greater than the sum of the first width ($\tau_3$) and the width of a first field in a sequence (TS).

5. System according to any one of claims 1 to 4, characterized in that the field detecting means (72, 76, 77) comprise a monostable flip-flop (72) retriggerable by leading (rising) edges of fields of the first signal and having a time constant equal to the second width ($\tau_2$), an OR gate (76) having two inputs connected to an output ($Q_2$) of the flip-flop and an output ($C_8$,75) of the counting means (71,75) respectively and an output controlling the respective first switching means ($52_r$), and an AND gate (77) having two inputs connected to the outputs ($\overline{Q}_2$; $C_8$;75) of the flip-flop and counting means respectively and an output connected to a zero-resetting input (RAZ) of the counting means, said counting means output controlling the respective second switching means ($62_r$).

**Ansprüche**

1. Einrichtung zur schrittweisen Fernortung von Paaren von ersten und zweiten Zwischenverstärkern in einer digitalen Übertragungsleitung für beide Richtungen zwischen einer ersten und einer zweiten Endeinrichtung, wobei die Leitung aus einem ersten Übertragungsdraht ($3_1$ - $3_{R+1}$), durch den die ersten Zwischenverstärker ($5_1$ - $5_R$) jeweils über erste Vermittlungseinrichtungen ($52_1$ - $52_R$) verbunden sind, die zur Übertragung eines ersten digitalen Signals von der ersten Einrichtung (1) zur zweiten Einrichtung (2) geschlossen sind, und aus einem zweiten Übertragungsdraht ($4_{R+1}$ - $4_{1+}$), über den die zweiten Zwischenverstärker ($6_R$ - $6_1$) jeweils über zweite Vermittlungseinrichtung ($62_R$ - $62_1$) verbunden sind, die zur Übertragung eines zweiten digitalen Signals von der zweiten Einrichtung (2) zur ersten Einrichtung (1) geschlossen sind, besteht, wobei die erste Einrichtung (1) Einrichtungen (11 - 14) zum Abschneiden des ersten numerischen Signals durch Unterbrechungsfolgen (SE) aufweist, wobei jede Folge k erste Unterbrechungen ($I_1$ - $I_k$) einer vorbestimmten Dauer (TI) und eine letzte Unterbrechung ($I_{k+1}$) aufweist, denen jeweils k erste Signalbereiche ($S_1$ - $S_k$) mit einer vorbestimmten Breite (TS) und ein letzter Bereich ($S_{k+1}$) vorangehen, wobei k eine ganze Zahl ist, und r Folgen nacheinander im ersten Draht übertragen werden, um ein Paar von Zwischenverstärkern ($5_r$, $6_r$) fernzuorten, die eine ganzzahlige Rangfolge r gezählt ab der ersten Einrichtung (1) aufweisen, wobei der letzte Bereich der letzten Sequenz der r Sequenzen eine größere Breite als die der anderen Signalbereiche aufweist, und jedes aus einem ersten und zweiten Zwischenverstärker ($5_r$, $6_r$) gebildetes Paar über Zähleinrichtungen (71, 75) für die Unterbrechungen jeder Sequenz und über Einrichtungen (73) zum Nullsetzen der Zähleinrichtungen als Antwort auf eine Unterbrechung im ersten Signal verbunden sind, wobei die Unterbrechung eine erste Dauer ($\tau_3$) aufweist, die größer ist als die Summe der Breiten (TS + TI) eines ersten Bereiches und einer ersten Unterbrechung in der Folge (SE), und die Zähleinrichtungen (71, 75) die Auslösung der ersten Vermittlungseinrichtungen ($52_r$) steuern, um den jeweils ersten Zwischenverstärker ($5_r$) vom ersten Zwischenverstärker des nächstfolgenden Ranges ($5_{r+1}$) zu trennen, und eine Auslösung der zweiten Vermittlungseinrichtungen ($62_r$) steuern, um die jeweils zweiten Zwischenverstärker ($6_r$) vom zweiten Zwischenverstärker des nächstfolgenden Ranges ($6_{r+1}$) zu trennen und um die ersten und zweiten Zwischenverstärker ($5_r$, $6_r$) über eine Rückkopplungsschleife ($56_r$) zu verbinden, sobald die Zähleinrichtungen eine k entsprechende Zahl erreichen, und Schalter der ersten und zweiten vermittlungseinrichtungen ($52_r$, $62_r$) steuern, so lange die Zahl von k verschieden ist, dadurch gekennzeichnet, daß jedes aus einem ersten und zweiten Zwischenverstärker ($5_r$, $6_r$) gebildete Paar über Einrichtungen (72, 76, 77) zur Detektierung von Bereichen des ersten Signals, die eine zweite Dauer ($\tau_2$) aufweisen, die größer ist als die Summe der Dauer (TS + TI) eines ersten Feldes einer ersten Unterbrechung in einer Sequenz, verbunden sind, wobei die Detektiereinrichtungen (72, 76, 77) den Schalter der jeweils ersten Vermittlungseinrichtung ($52_r$) steuern, sobald ein Bereich des ersten Signals diese Summe überschreitet und solange die Zahl der zugeordneten Zähleinrichtungen (71, 75) gleich k ist, und das Nullsetzen der verbundenen Zähleinrichtungen steuern, sobald ein Bereich des ersten Signals diese Summe überschreitet und solange die Zahl der zugeordneten Zähleinrichtungen von k verschieden ist.

2. Einrichtung nach Anspruch 1, dadurch gekennzeichnet, daß die letzten Unterbrechungen ($I_{k+1}$) eine Dauer (TI) aufweisen, die gleich derjenigen der ersten Unterbrechungen ist, und daß die letzten Bereiche ($S_{k+1}$) in den (r-I) ersten Folgen eine Dauer (TS) aufweisen, die gleich derjenigen der ersten Bereiche ist.

3. Einrichtung nach Anspruch 1 oder 2, dadurch gekennzeichnet, daß die erste Dauer ($\tau_3$) kleiner ist als die Summe aus der Dauer (TS) der ersten Bereiche und der doppelten Dauer (2 TI) einer Unterbrechung in einer Sequenz (SE).

4. Einrichtung nach einem der Ansprüche 1 bis 3, dadurch gekennzeichnet, daß die zweite Dauer ($\tau_2$) größer ist als die Summe aus der ersten Dauer ($\tau_3$) und der Dauer eines ersten Bereiches der Sequenz (TS).

5. Einrichtung nach einem der Ansprüche 1 bis 4, dadurch gekennzeichnet, daß die Detektiereinrichtungen (72, 76, 77) der Bereiche eine monostabile Kippstufe (72), die durch die vordere (ansteigende) Flanke des Bereichs des ersten Signals betätigbar ist und eine Zeitkonstante gleich der zweiten Dauer ($\tau_2$) aufweist, eine Torschaltung OU (76) mit zwei Eingängen, die jeweils mit einem Ausgang ($\overline{Q}_2$) der Kippstufe und mit einem Ausgang ($C_8$, 75) der Zähleinrichtungen (71, 75) verbunden sind, und mit einem Ausgang, der die jeweils ersten Vermittlungseinrichtungen ($52_r$) steuert, und eine Torschaltung ET (77), die zwei Eingänge, die jeweils mit den Ausgängen ($\overline{O}_2$; $C_8$, 75) der Kippstufe verbunden sind, und Zähleinrichtungen und einen Ausgang aufweisen, der mit dem Eingang der Rücksetzeinrichtung (RAZ) der Zähleinrichtungen verbunden ist, wobei der Ausgang der Zähleinrichtungen die zweiten Vermittlungseinrichtungen ($62_r$) steuert, aufweisen.

FIG.1

EQUIPEMENT TERMINAL SURVEILLANT — 1

UNITE DE COMMANDE — 11

TEST (S) — 12

SEQUENCES TELELOC. — 13

MELANGEUR — 14

JONCTEUR — 15

REPETEUR — $5_1$

$3_1$ | $51_1$ | $52_1$ | $53_1$ | $3_2$

$7_1$ CCT TELELOC. | $56_1$

REPETEUR — $6_1$

$4_1$ | $63_1$ | $62_1$ | $61_1$ | $4_2$

REPETEUR — $5_r$

$3_r$ | $51_r$ | $52_r$ | $53_r$ | $3_{r+1}$

$7_r$ CCT TELELOC. | $56_r$

REPETEUR — $6_r$

$4_r$ | $63_r$ | $62_r$ | $61_r$ | $4_{r+1}$

REPETEUR — $5_R$

$3_R$ | $51_R$ | $52_R$ | $53_R$ | $3_{R+1}$

$7_R$ CCT TELELOC | $56_R$

REPETEUR — $6_R$

$4_R$ | $63_R$ | $62_R$ | $61_R$ | $4_{R+1}$

EQUIPEMENT TERMINAL SURVEILLE — 2

EP 0 261 003 B1

# FIG.2

EP 0 261 003 B1

FIG.3